# EUROPÄISCHE PATENTANMELDUNG

(11) **EP 2 757 440 A1**
(43) Veröffentlichungstag der Anmeldung: **23.07.2014**
(21) Anmeldenummer: 14164423.7
(22) Anmeldetag: 16.03.2012
(51) Int. Cl.: G06F 1/16, G07G 1/00, G07F 7/08

(54) **Belegdrucker zum Bedrucken von Belegen**

(30) Priorität: 16.03.2011 DE 102011001331
(62) Teilanmeldung aus: 12715613.1
(71) Anmelder: Wincor Nixdorf International GmbH, 33106 Paderborn (DE)
(72) Erfinder: Baitz, Günter, 13629 Berlin (DE)
(74) Vertreter: Richly, Erik

(57) **Zusammenfassung**

Die Erfindung betrifft einen Belegdrucker (10) zum Drucken von Belegen, der eine Druckeinheit (14) zum Bedrucken der Belege und eine Dockingeinheit (18) umfasst. Die Dockingeinheit (18) ist derart ausgebildet, dass ein Tablet-Computer (20) über eine lös- und wiederherstellbare Verbindung mechanisch an dem Belegdrucker (10) befestigbar ist.

## Beschreibung

Die Erfindung betrifft einen Belegdrucker, der eine Druckeinheit zum Bedrucken der Belege umfasst. Der Belegdrucker wird insbesondere in Verbindung mit Kassensystemen in Einzelhandelsfilialen eingesetzt.

Bekannte Kassensysteme umfassen eine Datenverarbeitungseinheit, an die ein Belegdrucker als Peripheriegerät über ein Kabel angeschlossen ist. Ferner sind an die Datenverarbeitungseinheit eine Anzeigeeinheit zur Anzeige von Informationen an die Bedienperson des Kassensystems und eine Eingabeeinheit, beispielsweise eine Tastatur, zur Bedienung des Kassensystems angeschlossen. Problematisch an einem solchen Kassensystem ist, dass es komplex, unübersichtlich und platzintensiv ausgebaut ist. Der in Einzelhandelsunternehmen zur Verfügung stehende Platz im Kassenbereich ist knapp bemessen. Das oben beschriebene bekannte Kassensystem nimmt viel Raum ein, der nicht für andere Zwecke genutzt werden kann.

Es ist Aufgabe der Erfindung, einen Belegdrucker zum Drucken von Belegen anzugeben, der einen einfachen und kompakten Aufbau eines Kassensystems ermöglicht. Diese Aufgabe wird durch einen Belegdrucker mit den Merkmalen des Anspruchs 1 gelöst. Vorteilhafte Weiterbildungen der Erfindung sind in den abhängigen Ansprüchen angegeben.

Durch das Vorsehen einer Dockingeinheit, die derart ausgebildet ist, dass ein Tablet-Computer über eine lös- und wiederherstellbare Verbindung mechanisch an dem Belegdrucker befestigbar ist, wird erreicht, dass ein Tablet-Computer einfach an dem Belegdrucker befestigt werden kann. Es ist nicht notwendig, eine separate Dockingstation zum Andocken eines Tablet-Computers vorzusehen und diese mit einem Kabel mit dem Belegdrucker zu verbinden, der als Peripheriegerät dieser Dockingstation betrieben würde. Durch den Tablet-Computer können die Datenverarbeitungseinheit des Kassensystems, die Eingabeeinheit des Kassensystems und/oder die Anzeigeeinheit des Kassensystems ersetzt werden, sodass durch das Andocken eines Tablet-Computers an dem Belegdrucker ein sehr kompakt und übersichtlich ausgebildetes Kassensystem erreicht wird. Der erfindungsgemäße Belegdrucker integriert somit die Funktion eines Belegdruckers mit der einer Dockingstation in sehr kompakter Art.

Unter einem Tablet-Computer wird insbesondere jede tragbare, flache Datenverarbeitungseinheit verstanden, die vollständig in einem Gehäuse mit einem berührungssensitiven Bildschirms untergebracht ist und per Finger und/oder Stift bedient werden kann. Solche Tablet-Computer werden häufig auch als Tablet-PC oder Notepad bezeichnet.

Die Belege werden insbesondere auf Thermopapier gedruckt, wozu die Druckeinheit eine Thermozeile zum selektiven, punktuellen Erwärmen dieses Thermopapieres umfasst. Das Thermopapier ist insbesondere als Papierbahn ausgebildet, die zu einer Thermopapierrolle zusammengerollt in dem Belegdrucker aufgenommen ist. Nach dem Drucken eines Beleges über die Druckeinheit wird dieser Beleg über eine Schneideeinheit von der Papierbahn abgetrennt, sodass dieser an den Kunden ausgehändigt werden kann.

Bei einer besonders bevorzugten Ausführungsform umfasst der Belegdrucker eine Anzeigeeinheit zum Anzeigen von Informationen an einen Kunden, wobei die Dockingeinheit vorzugsweise derart angeordnet ist, dass ein Anzeigebereich eines über die Dockingeinheit an dem Belegdrucker befestigten Tablet-Computer in eine erste Richtung gerichtet ist, und wobei die Anzeigeeinheit derart angeordnet ist, dass ein Anzeigebereich diese Anzeigeeinheit in eine zweite Richtung gerichtet ist. Die beiden Richtungen sind insbesondere einander entgegengesetzt ausgerichtet. Somit kann, wenn ein Tablet-Computer über die Dockingeinheit an dem Belegdrucker angeschlossen ist, über den Anzeigebereich des Tablet-Computers der Belegdrucker, insbesondere ein ganzes Kassensystem, von einer Bedienperson bedient werden. Hierzu ist der Anzeigebereich des Tablet-Computers dieser Bedienperson zugewandt. Über den Anzeigebereich der Anzeigeeinheit des Belegdruckers dahingegen können Informationen, insbesondere der zu bezahlende Betrag, einem Kunden angezeigt werden. Durch die Integration der Anzeigeeinheit in den Belegdrucker wird ein noch kompakterer, platzsparender Aufbau des Belegdruckers und somit des gesamten Kassensystems erreicht.

Des Weiteren kann der Belegdrucker einen Scanner zum Erfassen von Barcodes aufweisen. Mit Hilfe dieses Scanners können die Barcodes von von dem Kunden ausgewählten Waren erfasst werden, ohne dass ein separater Scanner hierzu vorgesehen sein muss. Bei einer alternativen Ausführungsform kann ein separater Scanner auch über eine Steckverbindung zwischen einem Steckverbinder des Belegdruckers und einem Steckverbinder des separaten Scanners angeschlossen sein. Alternativ oder zusätzlich kann auch mit Hilfe einer Kamera des Tablet-Computers mindestens ein Bild mit einer Abbildung des Barcodes erfasst und der Barcode mit Hilfe eines Bilderkennungsverfahrens erkannt werden. Somit kann auf einen Scanner verzichtet werden.

Ferner ist es vorteilhaft, wenn der Belegdrucker mindestens eine Schnittstelle zum Anschließen eines Peripheriegerätes umfasst. Somit können an den Belegdrucker auf einfache Weise Peripheriegeräte, beispielsweise ein Scanner, eine Tastatur oder weitere Einheiten eines Kassensystems, angeschlossen werden. Es ist insbesondere nicht notwendig, dass diese Peripheriegeräte direkt an den an der Dockingeinheit des Belegdruckers befestigten Tablet-Computer angeschlossen werden müssen. Somit wird ein einfacher, kompakter Aufbau eines Kassensystems gewährleistet. Zusätzlich oder alternativ zu der Schnittstelle zum Anschließen von Peripheriegeräten können weitere Steckverbinder vorgesehen sein, über die eine Datenübertragungsverbindung und/oder eine Stromversorgung des Belegdruckers und/oder eines über die Dockingeinheit an den Belegdrucker befestigten Tablet-Computers ausgebildet sein können.

Ferner kann der Belegdrucker eine Sende- und/oder Empfangseinheit zum kabellosen Senden von Daten an einen Tablet-Computer und/oder zum Empfangen von von einem Tablet-Computer ausgesandten Daten, wenn der Tablet-Computer über die Dockingeinheit an dem Belegdrucker befestigt ist, umfassen. Hierdurch wird erreicht, dass auf einfache Weise Daten zwischen dem Belegdrucker und dem über die Dockingeinheit an ihm befestigten Tablet-Computer übertragen werden können, ohne dass eine Steckverbindung zwischen dem Belegdrucker und dem Tablet-Computer hierfür notwendig ist.

Die Dockingeinheit umfasst vorzugsweise eine ortsfeste erste Adaptereinheit und eine fest mit dem Tablet-Computer verbindbare zweite Adaptereinheit, wobei die erste Adaptereinheit ein Aufnahmefach aufweist, in das die zweite Adaptereinheit zum Herstellen der lös- und wiederherstellbaren Verbindung zwischen dem Belegdrucker und dem Tablet-Computer zumindest teilweise einschiebbar ist. Somit wird erreicht, dass der Tablet-Computer auf einfache Weise an dem Belegdrucker befestigt und auch auf einfache Weise wieder von ihm getrennt werden kann.

Das Aufnahmefach weist vorzugsweise vier Begrenzungselemente auf, wobei das erste Begrenzungselement derart ausgebildet ist, dass die zweite Adaptereinheit beim Einschieben in das Aufnahmefach zumindest teilweise auf ihm gleitet. Das zweite, dritte und vierte Begrenzungselement sind an drei verschiedenen Seiten des ersten Begrenzungselements angeordnet, sodass von den vier Begrenzungselementen ein Aufnahmebereich des Aufnahmefaches begrenzt wird, in dem die zweite Adaptereinheit zumindest teilweise aufgenommen ist, wenn sie in das Aufnahmefach eingeschoben ist. Ferner hat das Aufnahmefach mindestens ein Rückhalteelement zum Verhindern des Herausfallens der zweiten Adaptereinheit aus dem Aufnahmebereich.

Das zweite, dritte und vierte Begrenzungselement sind insbesondere wandartig ausgebildet und jeweils orthogonal zum ersten Begrenzungselement angeordnet. Das zweite und vierte Begrenzungselement sind wiederum orthogonal zum dritten Begrenzungselement und parallel zueinander angeordnet. Somit wird durch die vier Begrenzungselemente und das Rückhalteelement ein kastenförmiger Aufnahmebereich begrenzt, der eine dem dritten Begrenzungselement gegenüberliegende Öffnung aufweist, in die die zweite Adaptereinheit zum Herstellen der lös- und wiederherstellbare Verbindung zwischen den beiden Adaptereinheiten auf einfache Weise zumindest teilweise eingeschoben werden kann. Somit werden ein kompakter Aufbau und dennoch eine sichere Befestigung der zweiten Adaptereinheit an den Belegdrucker erreicht.

Die zweite Adaptereinheit weist insbesondere eine Aussparung auf, in die das Rückhalteelement eingreift, wenn die zweite Adaptereinheit in das Aufnahmefach eingeschoben ist. Somit wird eine besonders sichere Befestigung der zweiten Adaptereinheit und somit eines Tablet-Computers an der ersten Adaptereinheit erreicht. Bei einer besonders bevorzugten Ausführungsform weist die erste Adaptereinheit zwei Rückhalteelemente aus, die in zwei komplementär zu ihnen ausgebildete Aussparungen der zweiten Adaptereinheit eingreifen, wenn die zweite Adaptereinheit in die erste Adaptereinheit eingeschoben ist.

Die erste Adaptereinheit hat vorzugsweise einen ersten Steckverbinder, mit dessen Hilfe eine Steckverbindung mit einem komplementär zum ersten Steckverbinder ausgebildeten zweiten Steckverbinder der zweiten Adaptereinheit herstellbar ist, wenn die zweite Adaptereinheit in dem Aufnahmefach aufgenommen und somit mit der ersten Adaptereinheit verbunden ist. Über die Steckverbindung können Daten und/oder elektrische Energie zwischen dem Belegdrucker und einem an der zweiten Adaptereinheit befestigten Tablet-Computer übertragen werden. Insbesondere können somit auch Daten zwischen dem Tablet-Computer und weiteren über die zuvor beschriebene Schnittstelle an dem Belegdrucker angeschlossenen Peripherie-Geräten übertragen werden. Ferner ist es somit nicht notwendig, dass an dem Tablet-Computer selbst Kabel zur Stromversorgung und/oder zur Datenübertagung angeschlossen werden, sodass ein besonders einfach und kompakt aufgebautes Kassensystem erreicht wird. Des Weiteren kann der Tablet-Computer somit auf einfache Weise von dem Belegdrucker getrennt werden, ohne dass hierfür Kabel von dem Tablet-Computer entfernt werden müssen. Umgekehrt kann bei dem Wiedereinsetzen des Tablet-Computers in die Dockingeinheit die Stromversorgung und/oder Datenübertragungsverbindung des Tablet-Computers durch die Steckverbindung zwischen dem ersten und dem zweiten Steckverbinder auf einfache Weise wiederhergestellt werden, ohne dass hierfür aufwendig Kabel an den Tablet-Computer angeschlossen werden müssen. Somit bleibt der Vorteil eines Tablet-Computers, nämlich seine Mobilität und einfache Handhabung, erhalten.

Ferner ist es vorteilhaft, wenn in dem Aufnahmefach mindestens ein Stift angeordnet ist und wenn die zweite Adaptereinheit mindestens eine komplementär zu diesem Stift ausgebildete Öffnung aufweist. Beim Einschieben der zweiten Adaptereinheit in das Aufnahmefach greift der Stift in die Öffnung der zweiten Adaptereinheit ein, sodass die beiden Adaptereinheiten relativ zueinander beim Einschieben geführt werden und, insbesondere im hektischen Umfeld eines Kassensystems, auch beim schnellen Einschieben der zweiten Adaptereinheit in die erste Adaptereinheit Beschädigungen der Steckverbinder vermieden werden.

Es sind vorzugsweise zwei Stifte vorgesehen, die entsprechend in zwei zu ihnen komplementär ausgebildete Bohrungen der zweiten Adaptereinheit eingreifen. Die beiden Stifte sind insbesondere an dem dritten Begrenzungselement angeordnet und in das Aufnahmefach hineingerichtet. Die dem dritten Begrenzungselement abgewandten Enden der Stifte können insbesondere zugespitzt ausgebildet sein, sodass ein einfaches Einführen der Stifte in die Öffnungen sichergestellt ist.

Der Stift weist vorzugsweise eine Nut auf, in die ein Eingriffselement der zweiten Adaptereinheit in einem ersten Betriebszustand eingreift, sodass ein Entnehmen der zweiten Adaptereinheit aus der ersten Adaptereinheit und somit ein Entfernen des Tablet-Computers von dem Belegdrucker vermieden wird. In einem zweiten Betriebszustand dagegen ist das Eingriffselement außerhalb der Nut angeordnet, sodass die zweite Adaptereinheit aus der ersten Adaptereinheit entnommen werden kann. Die zweite Adaptereinheit umfasst insbesondere ein Verstellelement, mit dessen Hilfe das Eingriffselement zwischen den beiden zuvor beschriebenen Betriebszuständen verstellt werden kann. Bei einer alternativen Ausführungsform der Erfindung kann auch eine andere Sicherung gegen das Entfernen der zweiten Adaptereinheit aus der ersten Adaptereinheit und somit gegen das Entfernen des Tablet-Computers von dem Belegdrucker vorgesehen sein.

Die erste Adaptereinheit der Dockingeinheit ist insbesondere derart an einem Gehäuse des Belegdruckers gelagert, dass sie relativ zu dem Gehäuse um eine Drehachse verschwenkbar ist. Somit wird auch die zweite Adaptereinheit, wenn sie mit der ersten Adaptereinheit verbunden ist, mit verschwenkt, sodass auch ein an der zweiten Adaptereinheit befestigter Tablet-Computer verschwenkt wird. Somit kann durch ein Verschwenken der ersten Adaptereinheit der Betrachtungswinkel des Tablet-Computers verstellt werden und somit auf einfache Weise an die Lichtverhältnisse und/oder Wünsche der Bedienerperson des Belegdruckers angepasst werden.

Der Belegdrucker umfasst insbesondere einen Verriegelungsmechanismus, mit dessen Hilfe die erste Adaptereinheit in mehreren Positionen fixiert werden kann, sodass ein unbeabsichtigtes Verschwenken der Adaptereinheit um die Drehachse vermieden wird.

Bei einer alternativen Ausführungsform der Erfindung kann die Dockingeinheit auch derart ausgebildet sein, dass sie ein Aufnahmefach aufweist, in das der Tablet-Computer selbst zum Herstellen der lös - und wiederherstellbaren Verbindung zwischen dem Belegdrucker und dem Tablet-Computer zumindest teilweise einschiebbar ist.

Bei dieser Ausführungsform umfasst die Dockingeinheit nicht zwei Adaptereinheiten, von denen eine mit dem Tablet-Computer verbunden werden muss und die dann ineinander eingeschoben werden können. Das Aufnahmefache der Dockingeinheit ist derart dimensioniert, dass der Tablet-Computer selbst in dieses Aufnahmefach eingeschoben werden kann. Hierdurch wird ein besonders einfacher Aufbau erreicht, da ein standardmäßiger Tablet-Computer verwendet werden kann, ohne dass eine Adaptereinheit an ihnen befestigt werden muss. Ferner wird der Tablet-Computer durch das Aufnahmefach geschützt.

Das Aufnahmefach kann entsprechend den im Zusammenhang mit dem Aufnahmefach der ersten Adaptereinheit beschriebenen Merkmalen weitergebildet werden. Insbesondere kann das Aufnahmefach ein oder mehrere Steckverbinder umfassen, über die eine Steckverbindung zwischen dem Belegdrucker und einem in dem Aufnahmefach aufgenommenen Tablet-Computer hergestellt werden kann. Diese Steckverbinder sind vorzugsweise komplementär zu werkseitig an einer Kante bzw. Stirnseite des Tablet-Computers vorgesehenen Steckverbindern ausgebildet. Ein weiterer Aspekt betrifft eine Anordnung zum Drucken von Belegen, die einen Belegdrucker der zuvor beschriebenen Art umfasst und ferner einen Tablet-Computer hat, der mit Hilfe der Dockingeinheit des Belegdruckers an dem Belegdrucker angeordnet ist. Diese Anordnung ist insbesondere Teil eines Kassensystems.

Weitere Merkmale und Vorteile der Erfindung ergeben sich aus der folgenden Beschreibung, die die Erfindung anhand von Ausführungsbeispielen in Zusammenhang mit den beigefügten Figuren näher erläutert.

Es zeigen:
- Figur 1: eine schematische, perspektivische Darstellung eines Belegdruckers;
- Figur 2: eine schematische, perspektivische Darstellung des Belegdruckers nach Figur 1 und eines an dem Belegdrucker befestigten Tablet-Computers;
- Figur 3: eine weitere schematische, perspektivische Darstellung des Belegdruckers nach den Figuren 1 und 2;
- Figur 4: eine schematische, perspektivische Darstellung des Belegdruckers nach den Figuren 1 bis 3 mit ausgeblendetem Gehäuse;
- Figur 5: eine weitere schematische, perspektivische Darstellung des Belegdruckers nach den Figuren 1 bis 4 mit ausgeblendetem Gehäuse;
- Figur 6: eine weitere schematische, perspektivische Darstellung des Belegdruckers nach den Figuren 1 bis 5 mit ausgeblendetem Gehäuse; und
- Figur 7: eine Schnittdarstellung des Belegdruckers nach den Figuren 1 bis 6 und eines an ihm befestigten Tablet-Computers.

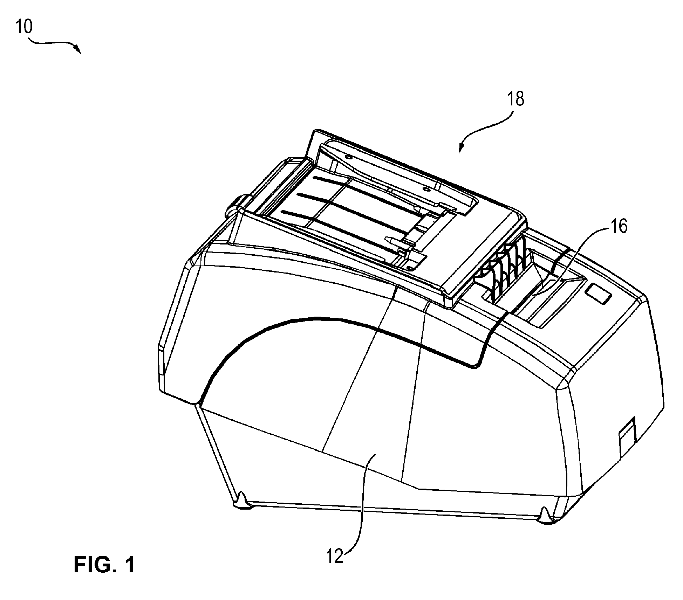

In Figur 1 ist eine schematische, perspektivische Darstellung eines Belegdruckers 10 zum Drucken von Belegen gezeigt. Ein solcher Belegdrucker 10 wird auch als Bondrucker bezeichnet und insbesondere in Verbindung mit Kassensystemen eingesetzt.

Der Belegdrucker 10 umfasst eine, in Figur 1 durch ein Gehäuse 12 des Druckers 10 verdeckte, Druckeinheit 14 zum Bedrucken von Belegen. Die gedruckten Belege werden über einen Ausgabeschlitz 16 ausgegeben, sodass sie an den Kunden ausgehändigt werden können. Die Druckeinheit 14 umfasst insbesondere mindestens eine Thermozeile, über die das Thermopapier, aus dem die Belege bestehen, punktuell erwärmt und somit mit einem Druckbild bedruckt wird. Das Thermopapier ist insbesondere in einer Form einer Papierbahn ausgebildet, wobei ein Beleg nach dem Drucken über eine Schneideeinheit der Druckeinheit 14 von der Papierbahn abgetrennt und über den Ausgabeschlitz 16 ausgegeben wird.

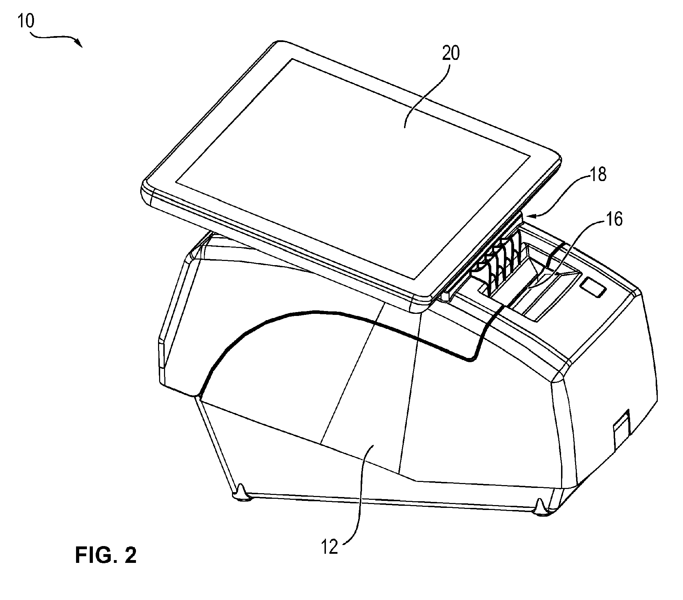

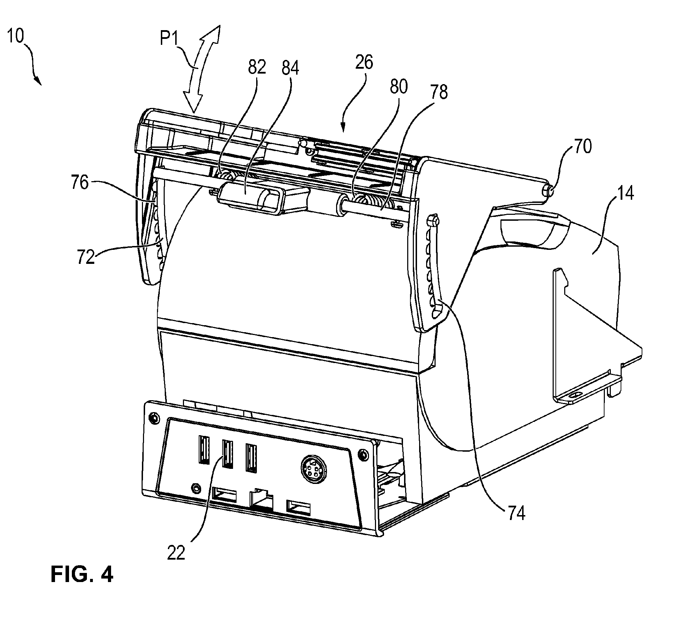

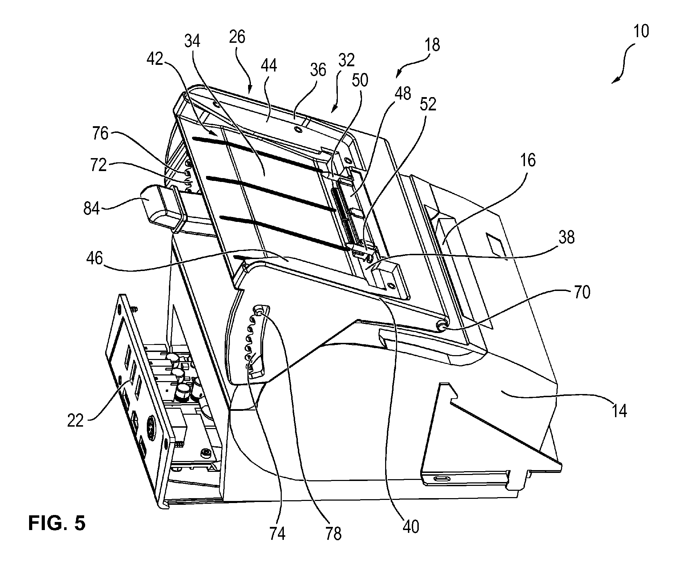

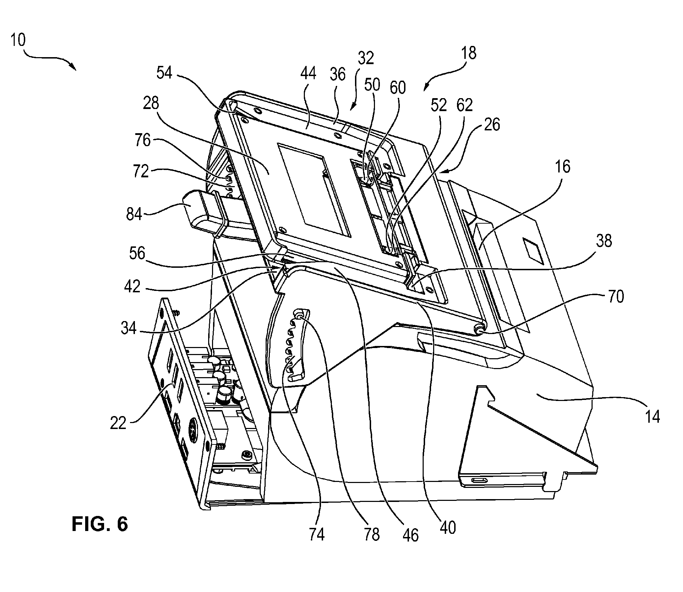

Ferner hat der Belegdrucker 10 eine Dockingeinheit 18, über die, wie in Figur 2 gezeigt, ein Tablet-Computer 20 an dem Belegdrucker 10 mechanisch befestigbar ist. Der genau Aufbau der Dockingeinheit 18 und das Befestigen des Tablet-Computers 20 über die Dockingeinheit 18 an den Belegdrucker 10 wird nachstehend in Zusammenhang mit den Figuren 4 bis 7 noch näher erläutert.

Über die Dockingeinheit 18 wird zum einen eine sichere mechanische Befestigung des Tablet-Computers 20 über eine lös- und wiederherstellbare Verbindung an den Belegdrucker 10 erreicht. Zum anderen wird über die Dockingeinheit 18 eine Datenübertragungsverbindung und/oder eine Stromversorgungsverbindung zwischen dem Belegdrucker 10 und dem Tablet-Computer 20 hergestellt.

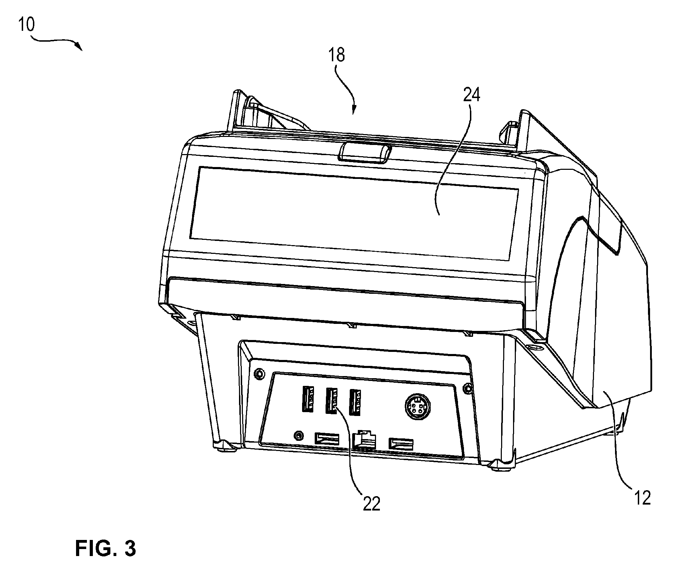

In Figur 3 ist eine weitere schematische, perspektivische Darstellung des Belegdruckers 10 nach den Figuren 1 und 2 gezeigt. Der Belegdrucker 10 weist mehrere Schnittstellen auf, von denen eine beispielhaft mit dem Bezugszeichen 22 bezeichnet ist. Über diese Schnittstellen können Peripheriegeräte, beispielsweise ein Scanner zum Einscannen von Barcodes, an den Belegdrucker 10 angeschlossen werden. Ferner kann über die Schnittstellen 22 eine Datenübertragungsverbindung zum Übertragen von Daten an den Belegdrucker 10 und/oder zum Aussenden von Daten von dem Belegdrucker 10 hergestellt werden. Des Weiteren kann über die Schnittstellen 22 eine Stromversorgung des Belegdruckers 10 und/oder des über die Dockingeinheit 18 mit dem Belegdrucker 10 verbundenen Tablet-Computers 20 erfolgen. Durch die Schnittstellen 22 ist es somit nicht notwendig, Kabel direkt an den Tablet-Computer 20 anzuschließen. Die Schnittstellen 22 sind insbesondere als USB-Schnittstelle, LAN-Schnittstelle und/oder Netzsteckverbinder ausgebildet.

Ferner umfasst der Belegdrucker 10 eine Anzeigeeinheit 24 zum Anzeigen von Informationen an einen Kunden. Über die Anzeigeeinheit 24 wird dem Kunden insbesondere der zu bezahlende Betrag angezeigt, wenn der Belegdrucker 10 als Teil eines Kassensystems verwendet wird. Die Anzeigeeinheit 24 ist derart angeordnet, dass ihr Anzeigebereich und der Anzeigebereich des Tablet-Computers in 20 unterschiedliche Richtungen gerichtet sind, sodass der Anzeigebereich des Tablet-Computers 20 von der Kassiererin bzw. dem Kassierer betrachtet und der Anzeigebereich der Anzeigeeinheit 24 von dem Kunden betrachtet werden können. Die Anzeigeeinheit 24 ist insbesondere in einer Form eines Displays ausgebildet.

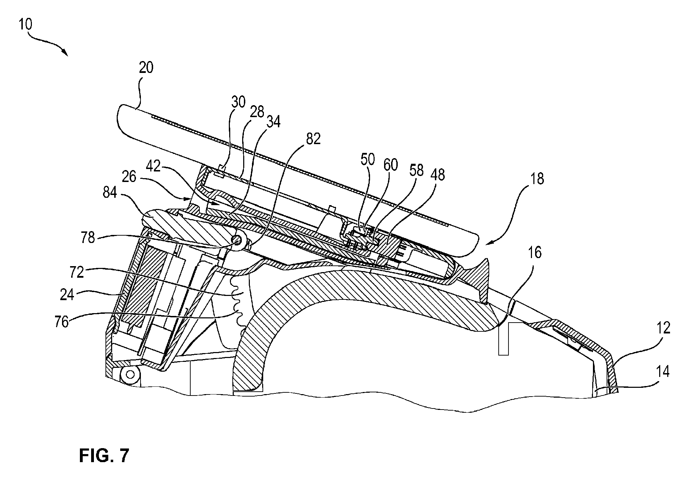

In den Figuren 4 bis 6 ist jeweils eine schematische, perspektivische Darstellung des Belegdruckers 10 dargestellt, wobei bei den drei Figuren jeweils das Gehäuse 12 ausgeblendet ist, damit die im Folgenden näher beschriebene Dockingeinheit besser sichtbar ist. Figur 7 zeigt eine Schnittdarstellung durch den Belegdrucker 10 und den mit dem Belegdrucker 10 verbundenen Tablet-Computer 20.

Die Dockingeinheit 18 umfasst eine fest mit dem Belegdrucker 10 verbundene erste Adaptereinheit 26 und eine über Nieten 30 fest mit dem Tablet-Computer 20 verbindbare zweite Adaptereinheit 28. Die erste Adaptereinheit 26 umfasst ein Aufnahmefach 32, in dem die zweite Adaptereinheit 28 zum Befestigen des Tablet-Computers 20 an dem Belegdrucker 10 zumindest teilweise aufnehmbar ist. Das Aufnahmefach 32 hat vier Begrenzungselemente 34 bis 40 über die ein Aufnahmebereich 42 des Aufnahmefaches 32 begrenzt ist. Ferner hat das Aufnahmefach 32 zwei Rückhalteelemente 44, 46, die ein Herausfallen der zweiten Adaptereinheit 28 aus dem Aufnahmebereich 42 verhindern, und somit sicherstellen, dass der Tablet-Computer 20 nicht unbeabsichtigt von der Dockingeinheit 18 gelöst wird.

Ferner umfasst die erste Adaptereinheit 26 mehrere Steckverbinder 48 und zwei Stifte 50, 52, die in den Aufnahmebereich 42 des Aufnahmefaches 32 hineinragen.

Die zweite Adaptereinheit 28 weist zwei Aussparungen 54, 56 auf, in die die Rückhalteelemente 44, 46 hineingreift, wenn die zweite Adaptereinheit 28 in die erste Adaptereinheit 26 eingeschoben wird, sodass eine sichere Befestigung des Tablet-Computers 20 an den Belegdrucker 10 erreicht wird.

Ferner weist die zweite Dockingeinheit 28 mehrere Steckverbinder 58 auf, die komplementär zu den Steckverbindern 48 der ersten Adaptereinheit 26 ausgebildet sind. Wenn die zweite Adaptereinheit 28 in das Aufnahmefach 32 eingeschoben ist, ist eine Steckverbindung zwischen den Steckverbindern 48, 58 hergestellt, über die Daten und/oder elektrische Energie zwischen den beiden Adaptereinheiten 26, 28 und somit zwischen dem Belegdrucker 10 und dem Tablet-Computer 20 übertragen werden können. Insbesondere können über diese Steckverbindung Daten und/oder elektrische Energie, die dem Belegdrucker 10 über die Schnittstellen 22 zugeführt wurden, an den Tablet-Computer 20 weiter übermittelt werden bzw. umgekehrt können von dem Tablet-Computer 20 ausgesandte Daten über die Schnittstelle 22 ausgesandt werden.

Darüber hinaus hat die zweite Dockingeinheit 28 zwei komplementär zu den Stiften 50, 52 ausgebildete Öffnungen 60, 62, in die die Stifte 50, 52 beim Einschieben der zweiten Adaptereinheit 28 in die erste Adaptereinheit 26 eingreifen, sodass die beiden Adaptereinheiten 26, 28 beim Einschieben relativ zueinander geführt sind. Somit wird, auch beim schnellen Einschieben der zweiten Adaptereinheit 28 in das Aufnahmefach 32 sichergestellt, dass die Steckverbinder 48, 58 ineinander eingreifen und keine Beschädigungen der Steckverbinder 48, 58 auftreten.

Die erste Adaptereinheit 26 ist um eine Drehachse 70 verschwenkbar an dem Gehäuse 12 gelagert, sodass die Adaptereinheit 26 und somit auch ein an ihr befestigter Tablet-Computer 20 in Richtung des Doppelpfeiles P1 verschwenkt werden können. Somit kann auf einfache Weise der Winkel des Anzeigebereichs des Tablet-Computers 20 relativ zur Horizontalen und somit der Betrachtungswinkel einer Bedienperson verändert und auf die individuellen Wünsche angepasst werden. Die erste Adaptereinheit 26 weist zwei jeweils eine Zahnung 76 aufweisende Aussparungen 72, 74 auf. Eine Stange 78 ist über zwei Federn 80, 82 derart vorgespannt, dass sie in die Zahnungen 76 von zwei parallelen Zahnstangen eingreift, sodass die erste Adaptereinheit 26 in der durch die Zahnungen 76 vorgegebenen Position gehalten ist.

Durch einen Knopf 84 kann die Stange 78 gegen die Kräfte der Federn 80, 82 derart bewegt werden, dass sie nicht mehr in die Zahnungen 76 eingreift. Während der Knopf 84 gedrückt ist, kann die erst Adaptereinheit 26 um die Drehachse 70 geschwenkt werden. Wird der Knopf 84 losgelassen, so wird die Stange 78 durch die Rückstellkraft der Federn 80, 82 wieder derart bewegt, dass sie in die Zahnungen 76 der Aussparung 72, 74 eingreift und somit die erste Adaptereinheit 26 in der entsprechend eingestellten Position hält.

Bei einer alternativen Ausführungsform der Erfindung kann die Dockingeinheit 18 auch lediglich die erste Adaptereinheit 26 umfassen, wobei in diesem Fall das Aufnahmefach 32 derart dimensioniert ist, dass der Tablet-Computer 20 selbst in das Aufnahmefach 20 zumindest teilweise eingeschoben werden kann. In diesem Fall ist keine zweite Adaptereinheit 28 notwendig, die an dem Tablet-Computer 20 befestigt werden muss. In diesem Fall sind die Steckverbinder 48 der ersten Adaptereinheit 26 insbesondere derart ausgebildet und angeordnet, dass sie mit Steckverbindern des Tablet-Computers 20, die an seiner unteren Seitenkante angeordnet sind, zum Herstellen einer Steckverbindung in Eingriff bringbar sind. Bei dieser Ausführungsform weist das Aufnahmefach insbesondere keine Stifte 50, 52 auf.

Durch den Belegdrucker 10 ist es möglich, ein Kassensystem übersichtlich und platzsparend auszubilden, da durch den Tablet-Computer 20 die Funktion eines Flachbildschirms und weitere Eingabegeräte, wie beispielsweise einer Tastatur, übernommen werden kann. Durch die integrale Ausbildung eines Belegdruckers 10 und einer Dockingstation 18 in dem zuvor beschriebenen Belegdrucker 10 wird erreicht, dass der Belegdrucker 10 nicht als ein Peripheriegerät über Kabel angeschlossen werden muss, sondern einfach und kompakt als eine Einheit aufgebaut ist, an die der Tablet-Computer 20 angedockt werden kann.

### Bezugszeichenliste

- 10: Belegdrucker
- 12: Gehäuse
- 14: Druckeinheit
- 16: Ausgabeschlitz
- 18: Dockingeinheit
- 20: Tablet-Computer
- 22: Schnittstelle
- 24: Anzeigeeinheit
- 26, 28: Adaptereinheit
- 30: Niete
- 32: Aufnahmefach
- 34 bis 40: Begrenzungselement
- 42: Aufnahmebereich
- 44, 46: Rückhalteelement
- 48, 58: Steckverbinder
- 50, 52: Stift
- 54, 56: Aussparung
- 60, 62: Öffnung
- 70: Drehachse
- 72, 74: Aussparung
- 76: Zahnung
- 78: Stange
- 80, 82: Feder
- 84: Knopf
- P1: Schwenkrichtung

## Patentansprüche

1. Belegdrucker zum Drucken von Belegen,
mit einer Druckeinheit (14) zum Bedrucken der Belege,
umfassend eine Dockingeinheit (18), die derart ausgebildet ist, dass ein Tablet-Computer (20) über eine lös- und wiederherstellbare Verbindung mechanisch an dem Belegdrucker (10) befestigbar ist,
**dadurch gekennzeichnet, dass**
der Belegdrucker (10) eine Anzeigeeinheit (24) zum Anzeigen von Informationen an einen Kunden umfasst.

2. Belegdrucker (10) nach Anspruch 1, **dadurch gekennzeichnet, dass** die Druckeinheit (14) eine Thermozeile zum punktuellen Erwärmen von Thermopapier umfasst.

3. Belegdrucker (10) nach einem der vorhergehenden Ansprüche, **dadurch gekennzeichnet, dass** die Dockingeinheit (18) derart angeordnet ist, dass ein Anzeigebereich eines über die Dockingeinheit (18) an dem Belegdrucker (10) befestigten Tablet-Computers (20) in eine erste Richtung gerichtet ist, und dass die Anzeigeeinheit (24) derart angeordnet ist, dass ein Anzeigebereich der Anzeigeeinheit (24) in eine zweite Richtung, insbesondere eine der ersten Richtung entgegengesetzte zweite Richtung, gerichtet ist.

4. Belegdrucker (10) nach einem der vorhergehenden Ansprüche, **dadurch gekennzeichnet, dass** der Belegdrucker (10) einen Scanner zum Erfassen von Barcodes aufweist.

5. Belegdrucker (10) nach einem der vorhergehenden Ansprüche, **dadurch gekennzeichnet, dass** mindestens eine Schnittstelle (22) zum Anschließen von Peripheriegeräten vorgesehen ist.

6. Belegdrucker (10) nach einem der vorhergehenden Ansprüche, **dadurch gekennzeichnet, dass** der Belegdrucker (10) eine Sende- und/oder Empfangseinheit zum kabellosen Senden von Daten an einen Tablet-Computer (20) und/oder Empfangen von von dem Tablet-Computer (20) ausgesandten Daten, wenn der Tablet-Computer (20) über die Dockingeinheit (18) an dem Belegdrucker (10) befestigt ist, umfasst.

7. Belegdrucker (10) nach einem der vorhergehenden Ansprüche, **dadurch gekennzeichnet, dass** die Dockingeinheit (18) eine ortsfeste erste Adaptereinheit (26) und eine fest mit dem Tablet-Computer (20) verbindbare zweite Adaptereinheit (28) umfasst, und dass die erste Adaptereinheit (26) ein Aufnahmefach (32) aufweist, in das die zweite Adaptereinheit (28) zum Herstellen der lös- und wiederherstellbaren Verbindung zwischen dem Belegdrucker (10) und dem Tablet-Computer (20) zumindest teilweise einschiebbar ist.

8. Belegdrucker (10) nach Anspruch 7, **dadurch gekennzeichnet, dass** das Aufnahmefach (32) ein erstes Begrenzungselement (34) umfasst, auf dem die zweite Adaptereinheit (28) beim Einschieben in das Aufnahmefach (32) zumindest teilweise gleitet, dass das Aufnahmefach (32) ein zweites Begrenzungselement (36), ein drittes Begrenzungselement (38) und ein viertes Begrenzungselement (40) umfasst, die an drei verschiedenen Seiten des ersten Begrenzungselements (34) angeordnet sind, dass das erste Begrenzungselement (34), das zweite Begrenzungselement (36), das dritte Begrenzungselement (38) und das vierte Begrenzungselement (40) einen Aufnahmebereich (42) begrenzen, in dem die zweite Adaptereinheit (28) zumindest teilweise aufgenommen ist, wenn sie in das Aufnahmefach (32) eingeschoben ist, und dass das Aufnahmefach (32) mindestens ein Rückhalteelement (44, 46) zum Verhindern des Herausfallens der zweiten Adaptereinheit (28) aus dem Aufnahmebereich (42) umfasst.

9. Belegdrucker (10) nach Anspruch 7 oder 8, **dadurch gekennzeichnet, dass** die erste Adaptereinheit (26) einen ersten Steckverbinder (48) umfasst, dass die zweite Adaptereinheit (28) einen komplementär zum ersten Steckverbinder (48) ausgebildeten zweiten Steckverbinder (58) umfasst, und dass zwischen dem ersten Steckverbinder (48) und dem zweiten Steckverbinder (58) eine Steckverbindung zur Übertragung von Daten und/oder elektrischer Energie zwischen dem Belegdrucker (10) und dem Tablet-Computer (20) hergestellt ist, wenn die zweite Adaptereinheit (28) in dem Aufnahmefach (32) aufgenommen ist.

10. Belegdrucker (10) nach einem der Ansprüche 7 bis 9, **dadurch gekennzeichnet, dass** im Aufnahmefach (32) mindestens ein Stift (50, 52) angeordnet ist, dass die zweite Adaptereinheit (28) mindestens eine komplementär zum Stift (50, 52) ausgebildete Öffnung (60, 62) umfasst, und dass der Stift (50, 52) während des Einschiebens der zweiten Adaptereinheit (28) in das Aufnahmefach (32) in die Öffnung (60, 62) eingreift.

11. Belegdrucker (10) nach Anspruch 10, **dadurch gekennzeichnet, dass** der Stift (50, 52) eine Nut aufweist, dass die zweite Adaptereinheit (28) ein Eingriffselement und eine Verstelleinheit zum Verstellen des Eingriffselements umfasst, dass in einem ersten Betriebszustand das Eingriffselement in die Nut eingreift, und dass in einem zweiten Betriebszustand das Eingriffselement außerhalb der Nut angeordnet ist.

12. Belegdrucker (10) nach einem der Ansprüche 7 bis 11, **dadurch gekennzeichnet, dass** die erste Adaptereinheit (26) um eine Drehachse (70) relativ zu einem Gehäuse (12) des Belegdruckers (10) verschwenkbar an diesem Gehäuse (12) gelagert ist.

13. Belegdrucker (10) nach einem der Ansprüche 1 bis 6, **dadurch gekennzeichnet, dass** die Dockingeinheit (18) ein Aufnahmefach aufweist, in das der Tablet-Computer (20) zum Herstellen der lös- und wiederherstellbaren Verbindung zwischen dem Belegdrucker (10) und dem Tablet-Computer (20) zumindest teilweise einschiebbar ist.

14. Anordnung zum Drucken von Belegen,
mit einem Belegdrucker (10) nach einem der Ansprüche 1 bis 13, und
mit einem Tablet-Computer (20), der über die Dockingeinheit (10) des Belegdruckers (10) an dem Belegdrucker (10) befestigt ist.
